(19) Europäisches Patentamt
European Patent Office
Office européen des brevets

(11) **EP 3 671 113 A1**

(12) **EUROPEAN PATENT APPLICATION**
published in accordance with Art. 153(4) EPC

(43) Date of publication:
**24.06.2020 Bulletin 2020/26**

(21) Application number: **18845694.1**

(22) Date of filing: **17.08.2018**

(51) Int Cl.:
*G01B 11/25* (2006.01)  *G01B 11/30* (2006.01)
*G06F 17/10* (2006.01)  *G06T 1/00* (2006.01)
*G06T 7/60* (2017.01)  *H04N 5/225* (2006.01)
*G01B 21/02* (2006.01)

(86) International application number:
**PCT/KR2018/009481**

(87) International publication number:
**WO 2019/035695 (21.02.2019 Gazette 2019/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.08.2017 KR 20170104706**

(71) Applicant: **POSCO**
**Pohang-si, Gyeongsangbuk-do 37859 (KR)**

(72) Inventors:
• **CHOI, Yong-Joon**
  **Pohang-si**
  **Gyeongsangbuk-do 37877 (KR)**
• **KONG, Nam-Woong**
  **Pohang-si**
  **Gyeongsangbuk-do 37877 (KR)**
• **CHOI, Cheol-Hee**
  **Pohang-si**
  **Gyeongsangbuk-do 37877 (KR)**

(74) Representative: **Zech, Stefan Markus**
**Meissner Bolte Patentanwälte**
**Rechtsanwälte Partnerschaft mbB**
**Postfach 86 06 24**
**81633 München (DE)**

(54) **DEVICE AND METHOD FOR MEASURING KINKS IN COIL**

(57) The present invention relates to a device and a method for measuring kinks in a coil, whereby kinks, which are shape defects in a coil, are measured after the coil is wound in a coiler of a hot rolling line but before the coil is transported to post-processing. The device for measuring kinks in a coil according to an embodiment of the present invention includes: a laser generator for irradiating the coil with a linear laser passing from one coil surface, which includes the inner wound part of the coil, through the central point of the coil; a camera for acquiring an image of the inner wound part from the one coil surface to the other coil surface on the reverse side of the one coil surface with respect to the central point of the coil, while moving along with the laser of the laser generator; and a measuring instrument for measuring the quantity of kinks in the coil by calculating the distance from the central point of the coil to the coil end on the one coil surface and the distance from the central point of the coil to the coil end on the other coil surface on the basis of the image acquired by the camera.

[FIG.1]

EP 3 671 113 A1

## Description

[Technical Field]

The present disclosure relates to a device and a method for measuring kinks in a coil.

[Background Art]

In general, when describing a coiling process in a hot rolling line, a fore-end portion of a strip is bent downwardly while passing through a pair of pinch rolls. The fore-end portion of the strip, which is bent, then wraps around a mandrel between the mandrel and a wrapper roll surrounding it. After a certain amount of time has passed, the mandrel is extended in a circumferential direction and coiling is performed while tension is applied between the pinch roll and the mandrel.

In the coiler described above, when a material thereof is an extremely thick material, a bending phenomenon occurs during initial mandrel entry due to a shape of the fore-end portion at the time of strip entry and an inadequate bending effect, which is defined as a kink. Such a kink is a big problem, in that it must be cut out by hand, using a cutting torch, or the like, due to a defect that cannot allow a circle to be formed during piping work due to deformation in an inner winding of a coil part when the kink occurs in extremely thick coiling. In addition, there may be a problem that complaints from customers occur when kinks are not found in advance.

Such a prior art can be easily understood with reference to Republic of Korea Patent Publication No. 10-2011-0077782.

[Disclosure]

[Technical Problem]

According to an embodiment of the present disclosure, there is provided a device and a method for measuring kinks in a coil, whereby kinks, shape defects in a coil, are measured after the coil is wound in a coiler of a hot rolling line but before the coil is transported for post-processing.

[Technical Solution]

According to an embodiment of the present disclosure, a device for measuring kinks in a coil includes: a laser generator for irradiating the coil with a linear laser passing from one coil surface, which includes an inner wound part of the coil, through a central point of the coil; a camera for acquiring an image of the inner wound part from the one coil surface to the other coil surface on a reverse side of the one coil surface with respect to the central point of the coil, while moving with the laser of the laser generator; and a measuring instrument for measuring a quantity of kinks in the coil by calculating a distance from the central point of the coil to a coil end on the one coil surface and a distance from the central point of the coil to a coil end on the other coil surface on a basis of the image acquired by the camera.

In addition, according to an embodiment of the present disclosure, a method for measuring kinks in a coil includes operations of: irradiating a linear laser passing through a central point of the coil on one coil surface with a laser generator including an inner wound part of the coil, and acquiring an image of the inner wound part from the one coil surface to the other coil surface on a reverse side of the one coil surface with respect to the central point of the coil, while moving with the laser of the laser generator irradiating a linear laser passing through a central point of the coil on one coil surface with a laser generator including an inner wound part of the coil; and measuring a quantity of kinks in the coil with a measuring instrument by calculating a distance from the central point of the coil to a coil end of the one coil surface and a distance from the central point of the coil to a coil end of the other coil surface of the coil on a basis of the image acquired by the camera.

[Advantageous Effects]

According to an embodiment of the present disclosure, not only it can be utilized for marketing according to a quantitative size of kinks, but also a problem can be grasped in advance and a standard of a coiling operation can be made, thereby stabilizing coiling quality.

[Description of Drawings]

FIG. 1 is a schematic configuration diagram of a device for measuring kinks in a coil according to an embodiment of the present disclosure.

FIG. 2 is a schematic flowchart of a method for measuring kinks in a coil according to an embodiment of the present disclosure.

FIGS. 3A to 3D are views illustrating a principle for measuring kinks in a coil of a device and a method for measuring kinks in a coil according to an embodiment of the present disclosure.

[Best Mode for Invention]

Hereinafter, embodiments of the present disclosure will be described in detail with reference to the accompanying drawings so that those skilled in the art may easily implement the present disclosure.

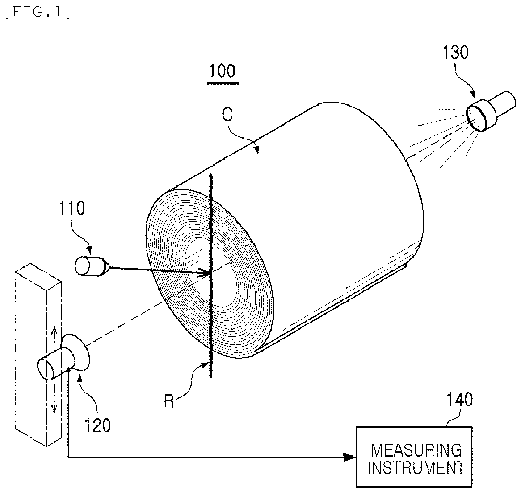

FIG. 1 is a schematic configuration diagram of a device for measuring kinks in a coil according to an embodiment of the present disclosure.

Referring to FIG. 1, a device for measuring kinks in a coil 100 according to an embodiment of the present disclosure may include a laser generator 110, a camera 120, and a measuring instrument 140, and may further include an illumination 130.

The laser generator 110 may generate a linear laser on one coil C surface on which a steel sheet is wound. The one coil C surface may include an inner wound part having an end of the steel sheet, which is wound. The linear laser of the laser generator 110 may be generated to pass through a central point of the coil.

The camera 120 may be disposed in a frame to acquire an image including the central point of the coil C. That is, the camera 120 may move along the laser of the laser generator 110 to acquire an image of the inner wound part from one coil surface with respect to the central point of the coil C to the other coil surface on a reverse side of the one coil surface. Accordingly, an image including an internal shape of the coil may be acquired. That is, the image of the inner wound part to the other coil surface on a reverse side of the one coil surface may acquire an image including an internal shape of an annular coil.

In order to clearly obtain the internal shape of the coil, an illumination 130 may be disposed on the other surface side on a reverse side of the one coil surface and light may be irradiated to the other coil C surface.

The measuring instrument 140 may measure a quantity of kinks in the coil by calculating a distance from a central point of the coil C to a coil end on the one coil surface and a distance from a central point of the coil C to a coil end on the other coil surface based on the image acquired by the camera 120.

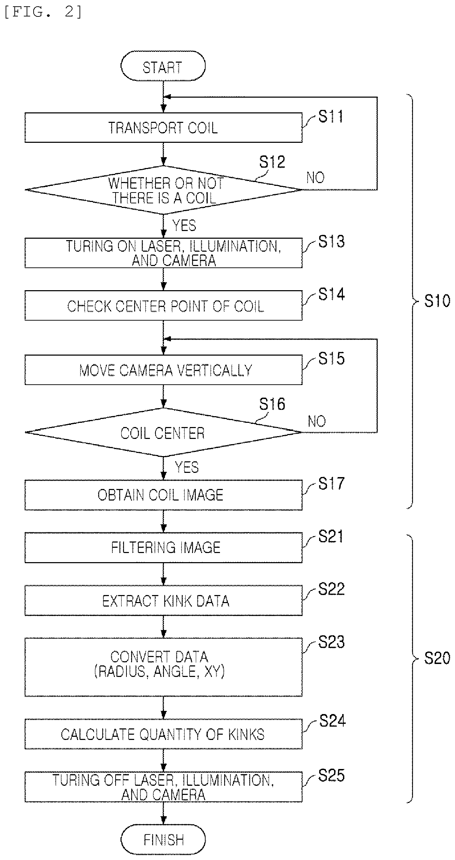

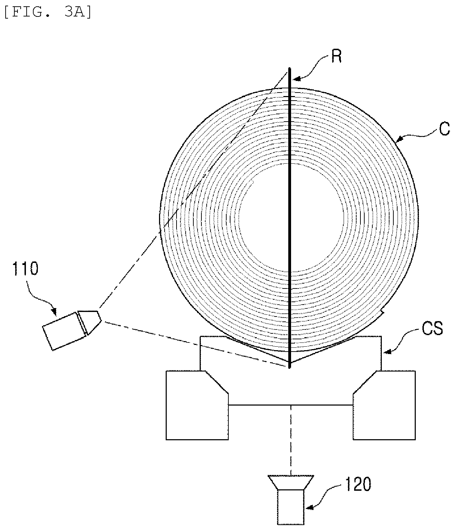

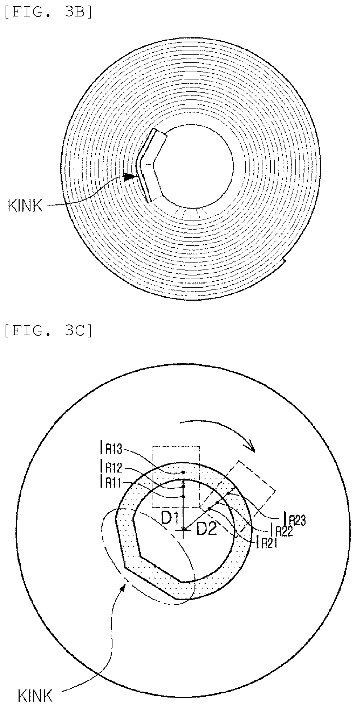

FIG. 2 is a schematic flowchart of a method for measuring kinks in a coil according to an embodiment of the present disclosure, and FIGS. 3A to 3B are views illustrating a principle for measuring kinks in a coil of a device and a method for measuring kinks in a coil according to an embodiment of the present disclosure.

Referring to FIGS. 2 and 3A to 3D, with FIG. 1, a method for measuring kinks in a coil may include operations of: irradiating a linear laser passing through a central point of the coil on one coil surface with a laser generator 110 including an inner wound part of the coil, and acquiring an image of the inner wound part from the one coil surface to the other coil surface on a reverse side of the one coil surface with respect to the central point of the coil, while moving with the laser of the laser generator 110 (S10); and measuring a quantity of kinks in the coil C with a measuring instrument 140 by calculating a distance from the central point of the coil to a coil end of the one coil surface and a distance from the central point of the coil to a coil end of the other coil surface, on a basis of the image acquired by the camera 120 (S20).

More specifically, first, it is determined whether the coil in which the steel sheet is wound is transported (S11, S12), and the laser generator 110, the camera 120, and the illumination 130 (S13) may be operated.

In this case, since a position of a coil support CS is constant for each coil, a laser line R may be fixed and since the center of the coil C, moves only up and down according to the weight of the coil, the laser line R may always pass the central point of the coil (S14). After being moved to the central line of the coil using a frame that can vertically move the camera 120 using the laser line R and by placing the illumination 130 in a position facing the other coil C surface, on a reverse side of one coil C surface, an image accurately including a coil internal shape of an annular shape may be obtained by irradiating the other surface of the coil C with light.

That is, since a center of a portion without the laser line becomes the central line of the coil C, after checking the image in the camera 120 that can be driven in the vertical direction with respect to the laser line R, when the frame of the camera 120 is moved to the central point, the coil center and the camera center coincide with each other. Since the kink is observed in the internal shape of the coil C, to increase image clarity in the coil, when the illumination 130 is installed to irradiate light on the other coil surface on a reverse side of one coil surface, the coil central portion is formed of a donut-shaped annular shape, the image thereof is obtained with the camera 120. Thereby, the quantity of kinks in the coil may be measured by a simple structure consisting of a laser generator, an illumination, and one camera (S14 to S17).

Thereafter, the measuring instrument 140 may filter the acquired image (S21), calculate the quantity of kinks in the coil C (S22 to S24), and operations of the laser generator 110, the camera 120, and the illumination 130 may be stopped (S25).

That is, the measuring instrument 140 obtains coil internal position information by calculating an image change from a predetermined distance from the central point with respect to the obtained coil internal image. In addition, since the annular-shape image is measured, the opposite coil internal position may also be measured. Thus, a stable quantity of kinks in the coil may be obtained from two pieces of information. The coil internal position may be calculated by the following formulas.

(Formula)

$$D1_N = \left. \frac{I_{R13} - I_{R12}}{I_{R12} - I_{R11}} \right|_{\theta = \theta_N} \geq \alpha$$

$$D2_N = \left. \frac{I_{R23} - I_{R22}}{I_{R22} - I_{R21}} \right|_{\theta = \theta_N} \geq \alpha$$

where D1 is a distance of the coil end on the other coil surface from the central point of the coil, D2 is a distance of the coil end on the one coil surface from the central point of the coil, N is an arbitrary position, I is an image bit output magnitude at arbitrary positions, R11, R12, R13 mean each radius of three different points at arbitrary positions, R21, R22, R23 mean each radius of three different points at arbitrary positions, $\alpha$ is a threshold, and $\theta$ is an arbitrary angle.

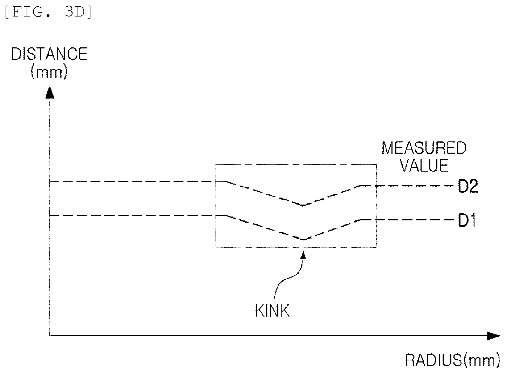

Using the value, as shown in FIG. 3D, a portion in which D1 and D2 are smaller than a predetermined value becomes a kink generating position, and a value at this time becomes a quantity of kinks. In addition, by taking an average value of (D1 + D2) / 2 from two pieces of information, measurement errors may be prevented, and data in which the measurement errors occurred may be deleted using a threshold.

As described above, according to the present disclosure, not only it can be utilized for marketing according to a quantitative size of kinks, but also a problem can be grasped in advance and a standard of a coiling operation can be made, thereby stabilizing coiling quality.

While example embodiments have been shown and described above, it will be apparent to those skilled in the art that modifications and variations could be made without departing from the scope of the present inventive concept as defined by the appended claims.

**Claims**

1. A device for measuring kinks in a coil, comprising:

   a laser generator for irradiating the coil with a linear laser passing from one coil surface, which includes an inner wound part of the coil, through a central point of the coil; a camera for acquiring an image of the inner wound part from the one coil surface to the other coil surface on a reverse side of the one coil surface with respect to the central point of the coil, while moving with the laser of the laser generator; and
   a measuring instrument for measuring a quantity of kinks in the coil by calculating a distance from the central point of the coil to a coil end on the one coil surface and a distance from the central point of the coil to a coil end on the other coil surface on a basis of the image acquired by the camera.

2. The device for measuring kinks in a coil of claim 1, further comprising illumination for irradiating light onto the other coil surface.

3. The device for measuring kinks in a coil of claim 1, wherein the measuring instrument measures kinks in the coil by calculating a distance of a coil end on the one coil surface from the central point of the coil and a distance of a coil end of the other coil surface from the central point of the coil according to the following formula,

$$D1_N = \frac{I_{R13} - I_{R12}}{I_{R12} - I_{R11}}\bigg|_{\theta = \theta_N} \geq \alpha$$

$$D2_N = \frac{I_{R23} - I_{R22}}{I_{R22} - I_{R21}}\bigg|_{\theta = \theta_N} \geq \alpha$$

where D1 is a distance of a coil end on the other coil surface from the central point of the coil, D2 is a distance of a coil end on the one coil surface from the central point of the coil, N is an arbitrary position, I is an image bit output magnitude at an any position, R11, R12, R13 is each radius of three different points at arbitrary positions, R21, R22, R23 is each radius of three different points at arbitrary positions, $\alpha$ is a threshold, and $\theta$ is an arbitrary angle.

4. A method for measuring kinks in a coil, comprising operations of:

   irradiating a linear laser passing through a central point of the coil on one coil surface with a laser generator including an inner wound part of a coil, and acquiring an image of the inner wound part from the one coil surface to the other coil surface on a reverse side of the one coil surface with respect to the central point of the coil, while moving with the laser of the laser generator; and
   measuring a quantity of kinks in the coil with a measuring instrument by calculating a distance from the central point of the coil to a coil end of the one coil surface and a distance from the central point of the coil to a coil end of the other coil surface of the coil on a basis of the image acquired by the camera.

5. The method for measuring kinks in the coil of claim 4, wherein the operation of acquiring the image is an operation in which an illumination irradiates light onto the other coil surface.

6. The method for measuring kinks in the coil of claim 4, wherein the operation of measuring a quantity of kinks in the coil is an operation of measuring kinks in the coil by calculating the distance from the central point of the coil to the coil end on the one coil surface and the distance from the central point of the coil to the coil end on the other coil surface according to the following formula with the measuring instrument,

$$D1_N = \frac{I_{R13} - I_{R12}}{I_{R12} - I_{R11}}\bigg|_{\theta = \theta_N} \geq \alpha$$

$$D2_N = \frac{I_{R23} - I_{R22}}{I_{R22} - I_{R21}}\bigg|_{\theta = \theta_N} \geq \alpha$$

where D1 is a distance of the coil end on the other coil surface from the central point of the coil, D2 is a distance of the coil end on the one coil surface from the central point of the coil, N is an arbitrary position, I is an image bit output magnitude at an any position, R11, R12, R13 is each radius of three different points at arbitrary positions, R21, R22, R23 is each radius of three different points at arbitrary positions, $\alpha$ is a threshold, and $\theta$ is an arbitrary angle.

[FIG.1]

[FIG. 2]

```
                    ( START )
                        │
        ┌───────────────┼──────────────────────┐
        │               ▼                        │
        │    ┌─────────────────────┐  ╭ S11      │
        │    │   TRANSPORT COIL    │             │
        │    └─────────────────────┘             │
        │               │               S12      │
        │               ▼         ╭───           │
        │          ◇ WHETHER OR NOT ◇──── NO ─────┤
        │            THERE IS A COIL              │
        │               │                         │
        │             YES                         │
        │               ▼                         │
        │    ┌─────────────────────┐  ╭ S13       │
        │    │ TURING ON LASER,    │              │
        │    │ ILLUMINATION,       │          ╮   │
        │    │ AND CAMERA          │          │   │
        │    └─────────────────────┘          │   │
        │               │                     │   │
        │               ▼                     │   │
        │    ┌─────────────────────┐  ╭ S14    │  │
        │    │ CHECK CENTER POINT  │           │ S10
        │    │ OF COIL             │           │  │
        │    └─────────────────────┘           │  │
        │               │                      │  │
        │  ┌────────────▼────────┐  ╭ S15       │  │
        └──┤  MOVE CAMERA        │              │  │
           │  VERTICALLY         │              │  │
           └─────────────────────┘              │  │
                        │            S16         │  │
                        ▼       ╭───             │  │
                   ◇ COIL CENTER ◇──── NO ───────┘  │
                        │                           │
                      YES                           │
                        ▼                           │
             ┌─────────────────────┐  ╭ S17        ╯
             │  OBTAIN COIL IMAGE  │
             └─────────────────────┘
                        │
                        ▼
             ┌─────────────────────┐  ╭ S21        ╮
             │   FILTERING IMAGE   │               │
             └─────────────────────┘               │
                        │                           │
                        ▼                           │
             ┌─────────────────────┐  ╭ S22         │
             │  EXTRACT KINK DATA  │                │
             └─────────────────────┘                │
                        │                           │
                        ▼                           │
             ┌─────────────────────┐  ╭ S23        │ S20
             │   CONVERT DATA      │                │
             │ (RADIUS, ANGLE, XY) │                │
             └─────────────────────┘                │
                        │                           │
                        ▼                           │
             ┌─────────────────────┐  ╭ S24         │
             │ CALCULATE QUANTITY  │                │
             │ OF KINKS            │                │
             └─────────────────────┘                │
                        │                           │
                        ▼                           │
             ┌─────────────────────┐  ╭ S25        ╯
             │ TURING OFF LASER,   │
             │ ILLUMINATION,       │
             │ AND CAMERA          │
             └─────────────────────┘
                        │
                        ▼
                    ( FINISH )
```

[FIG. 3A]

[FIG. 3B]

KINK

[FIG. 3C]

KINK

## INTERNATIONAL SEARCH REPORT

| International application No. |
| --- |
| **PCT/KR2018/009481** |

**A. CLASSIFICATION OF SUBJECT MATTER**

*G01B 11/25(2006.01)i, G01B 11/30(2006.01)i, G06F 17/10(2006.01)i, G06T 1/00(2006.01)i, G06T 7/60(2006.01)i, H04N 5/225(2006.01)i, G01B 21/02(2006.01)i*

According to International Patent Classification (IPC) or to both national classification and IPC

**B. FIELDS SEARCHED**

Minimum documentation searched (classification system followed by classification symbols)

G01B 11/25; B21C 51/00; G01B 11/02; G01B 11/24; G01B 11/30; G01N 21/952; G06F 17/10; G06T 1/00; G06T 7/60; H04N 5/225; G01B 21/02

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: coil, kink, measuring instrument, laser generator, camera, coil end, coil center point

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-1553152 B1 (HYUNDAI STEEL COMPANY) 15 September 2015 See paragraphs [0022]-[0030] and figure 1. | 1-2,4-5 |
| Y | | 3,6 |
| Y | KR 10-2011-0077782 A (RESEARCH INSTITUTE OF INDUSTRIAL SCIENCE & TECHNOLOGY) 07 July 2011 See paragraphs [0029]-[0048]. | 3,6 |
| X | JP 09-014933 A (NKK CORP. et al.) 17 January 1997 See paragraphs [0010], [0035]-[0052] and figure 2. | 1,4 |
| A | KR 10-1665869 B1 (POSCO) 13 October 2016 See paragraphs [0046]-[0068] and figure 1. | 1-6 |
| A | JP 2013-246151 A (JFE STEEL CORP.) 09 December 2013 See paragraphs [0018]-[0030] and figures 1-5. | 1-6 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15 NOVEMBER 2018 (15.11.2018) | **15 NOVEMBER 2018 (15.11.2018)** |

| Name and mailing address of the ISA/KR | Authorized officer |
| --- | --- |
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

**EP 3 671 113 A1**

| International application No. |
|---|
| **PCT/KR2018/009481** |

| Patent document cited in search report | Publication date | Patent family member | Publication date |
|---|---|---|---|
| KR 10-1553152 B1 | 15/09/2015 | NONE | |
| KR 10-2011-0077782 A | 07/07/2011 | KR 10-1188696 B1 | 08/10/2012 |
| JP 09-014933 A | 17/01/1997 | JP 3155681 B2 | 16/04/2001 |
| KR 10-1665869 B1 | 13/10/2016 | NONE | |
| JP 2013-246151 A | 09/12/2013 | JP 6106953 B2 | 05/04/2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020110077782